# EUROPEAN PATENT SPECIFICATION

(11) **EP 2 753 448 B1**
(45) Date of publication and mention of the grant of the patent: **20.01.2016**
(21) Application number: 12753519.3
(22) Date of filing: 05.09.2012
(51) Int. Cl.: B23K 9/08, B23K 9/20

(54) **STUD WELDING METHOD AND APPARATUS FOR WELDING A COMPONENT TO A SURFACE OF A WORKPIECE WITH VARYING GENERAL MAGNETIC FIELD ANGLE**
BOLZENSCHWEISSVERFAHREN UND VORRICHTUNG ZUM SCHWEISSEN EINES BAUTEILS AN EINER OBERFLÄCHE EINES WERKSTÜCKS MIT VARIIERENDEM ALLGEMEINEM MAGNETFELDWINKEL
PROCÉDÉ DE SOUDAGE EN BOUT ET APPAREIL POUR SOUDER UN COMPOSANT À UNE SURFACE D'UNE PIÈCE AVEC ANGLE DE CHAMP MAGNÉTIQUE GÉNÉRAL VARIABLE

(30) Priority: 08.09.2011 DE 102011113308
(43) Date of publication of application: 16.07.2014
(73) Proprietor: Newfrey LLC, Newark, Delaware 19711 (US)
(72) Inventor: SCHMITT, Klaus-Gisbert, 35394 Gießen (DE); GERLACH, Lothar, 35394 Giessen (DE); GOEBEL, Bernhardt, 35394 Giessen (DE); SCHLAEGER, Markus, 35394 Giessen (DE); ECCARIUS, Mathias, 98693 Ilmenau (DE)
(74) Representative: Witte, Weller & Partner Patentanwälte mbB
(86) International application number: PCT/EP2012/067252
(87) International publication number: WO 2013/034564

(56) References cited:
- JP-A- 62 203 675
- JP-B- 39 027 526
- US-A1- 2005 072 765
- US-A1- 2008 173 625
- DATABASE WPI Week 198703 30 May 1980 (1980-05-30) Thomson Scientific, London, GB; AN 1987-020515 XP002687725, -& SU 1 234 097 A1 (KORNEEV YU N) 30 May 1986 (1986-05-30)

## Description

The present invention relates to method of a stud welding for welding a component to a surface of a workpiece, according to the preamble of claim 1, and comprising the steps of lowering the component onto the surface of the workpiece and switching on an electric current; lifting the component off the workpiece, with the result that an arc which is oriented substantially in the longitudinal direction is struck; wherein the arc is influenced using a magnetic field which is oriented at a general magnetic field angle in relation to the longitudinal direction and has an axial component and/or a radial component, and finally lowering the component onto the workpiece in order to establish the weld connection.

The present invention also relates to an apparatus for stud welding a component onto a workpiece according to the preamble of claim 10, in particular for carrying out the abovementioned method, having a component holder on which a component can be held, a linear motor by means of which the component holder together with a component which is held on it can be moved in a longitudinal direction, a current source connection for connecting an electric welding current source, and a magnetic field generating device for generating a magnetic field, it being possible to influence an arc which is burning between the component and the workpiece by means of the said magnetic field, wherein the magnetic field is oriented at a general magnetic field angle in relation to the longitudinal direction and has an axial component and/or a radial component. For both preambles, see, as an example, US 2008/173625A).

A stud welding method of this kind and a corresponding apparatus are disclosed in JP S39-27526. This document discloses welding a rotationally symmetrical stud pin on a workpiece by means of an arc, wherein the arc is influenced by means of a magnetic field generating device which has an electrical coil and a yoke which is arranged concentrically relative to the stud and is in the form of a field former. An air gap is formed between an annular opening in the field former and the stud, with the magnetic field influencing the arc in the said air gap. In this case, the field former is arranged such that a magnetic field vector is oriented obliquely relative to the longitudinal axis, and therefore a radial and an axial component of the magnetic field act on the arc. The arc is made to rotate by the radial component. The arc is made to converge by the axial component.

A similar method is disclosed in DE 10 2009 054 365 A1.

Furthermore, DE 102 53 415 A1 discloses welding components with an elongate welding surface on a workpiece, wherein a magnetic field generating device moves the arc back and forth along the elongate welding surface, wherein the polarity of the magnetic field is reversed when the arc has reached the end of an end face.

The Japanese document cited in the introductory part cannot be used when the component is composed of a non-magnetic material, for example aluminium, since a magnetic circuit is closed by means of the component.

In stud welding methods of the kind cited in the introductory part, in which components which are composed of aluminium or another non-magnetic material are welded onto a corresponding workpiece, it is known to generate the arc using an alternating current instead of the direct current used in the above methods.

Against this background, it is an object of the invention to specify an improved stud welding method and an improved stud welding apparatus.

This object is achieved by a stud welding method according to Claim 1, the general magnetic field angle is deliberately varied over the arc duration in order to dynamically influence the arc by the mathematical sign of the radial and/or of the axial component being changed at least once over the arc duration.

The above object is also achieved by an apparatus as defined in claim 10, wherein the magnetic field generating device is designed to vary a general magnetic field angle of the magnetic field in relation to the longitudinal direction in order to dynamically influence the arc by the mathematical sign of the radial and/or of the axial component being changed at least once over the arc duration.

In the present case, dynamic influencing of the arc is understood to mean that the arc is influenced during the course of welding a component onto a workpiece, wherein the influencing can relate both to the direction of rotation of the arc and also to focusing (convergence) and defocusing. Influencing can also relate to the type of arc or to the type of charge carrier in the arc.

The term 'general magnetic field angle' is to be understood in the following manner in the present case. Since the magnetic field by means of which the arc is influenced is not homogeneous, the magnetic field angle is not constant as seen over the length of the arc. However, the vectors of the magnetic field strength which define the respective magnetic angle preferably each have a radial and/or an axial component which have the same mathematical sign. Preferably, only the magnitudes of the radial and/or of the axial component of the individual vectors differ. In particular, a general magnetic field angle can be understood to mean a medium magnetic field angle.

If the term 'magnetic field angle' is used in the text which follows, it is intended to relate to the general magnetic field angle.

The magnetic field angle can be varied using electrical measures and/or using mechanical measures.

In the present case, a component is preferably to be understood to mean a substantially rotationally symmetrical component, for example a stud with a circular cross section or an annular component such as a nut with an annular cross section. Accordingly, a welding surface of the component can be substantially circular or substantially annular, wherein the annular shape does not necessarily have to be continuous. The contours of the welding surfaces do not necessarily have to be circular, but rather can be polygonal.

The welding method according to the invention is suitable for any type of components composed of metal. However, in the present case, it is particularly important for it to be possible for the welding method to be used with components composed of non-magnetic or slightly magnetic materials, for example aluminium, aluminium alloys, stainless steel etc.

The electric current which is used to generate the arc can be a direct current, but is preferably an alternating current. Accordingly, the welding method according to the invention is highly variable and can be matched to various parameters, boundary conditions and process runs of stud welding.

The magnetic field which influences the arc is preferably oriented generally obliquely relative to the longitudinal axis of the arc and therefore has a radial component and an axial component.

As a result of changing the mathematical sign of the radial and/or of the axial component, the magnetic field vectors can be tilted in relation to the longitudinal direction of the arc or in relation to a plane transverse to the longitudinal direction of the arc, wherein the mathematical sign of the radial component, the mathematical sign of the axial component or the mathematical sign of both components can change.

In this case, it is particularly advantageous when the general magnetic field angle is mirrored at the axial component and/or at the radial component.

It is also possible for the general magnetic field angle to be rotated by 180°.

If the electric welding current is, for example, a direct current, the electrical charge carriers of the arc can be influenced, from focusing to defocusing and vice versa, by changing the mathematical sign of the radial and/or of the axial component.

In this case, focusing preferably takes place symmetrically in the case of rotationally symmetrical components, that is to say the arc is preferably directed radially inwards (focused) or directed radially outwards (defocused) over the entire circumference. Focusing and defocusing depend on the type of charge in the charge carriers which form the arc. The charge carriers can be ions and electrons. Ions are positively charged particles. Electrons are negatively charged and have a mass which is lower by a factor of 500,000 compared to ions in the material aluminium. The arc can also predominantly contain only electrons, in particular in the case of aluminium or aluminium alloys (generally called "aluminium" in the text which follows).

It is preferred when it is possible to determine which type of charge carrier is important for forming the arc. In this case, focusing or defocusing can be established in a deliberate manner. This depends, for example, on whether the charge carriers escape from an oxide layer or directly from a melt.

In general, it is preferred, at least when welding aluminium components, to determine the boundary conditions of the welding process such that the arc current substantially comprises only electrons. To this end, the direction of the arc current (that is to say the polarity of the said arc current) and the direction of the magnetic field vectors in the arc (the respective magnetic field angle) are important. If, for example, the mathematical sign of the axial component is changed during stud welding with direct current, the direction of rotation of the charge carriers is retained. However, focusing and defocusing of the charge carriers change each time the mathematical sign of the axial components of the magnetic field vectors changes. This change in mathematical sign can preferably be caused by a change in the arc length (change in lift during welding).

The radial components of the magnetic field vectors have an influence on the direction of rotation of the charge carriers and thereby also determine the focusing or defocusing of the said charge carriers.

The axial component of the magnetic field has an influence on the focusing/defocusing of the arc. Since the charge carriers can be positively (ions) or negatively (electrons) charged, either focusing of positive charge carriers together with defocusing of negative charge carriers, or vice versa, will always be achieved for a specific magnetic field with an axial component.

When an electric alternating current is used as the current for generating the arc, this meaning that the mathematical sign of the electric current changes at least once over the arc duration (preferably excluding any preceding cleaning steps), there is still a relatively large variety of options for influencing the arc.

Firstly, there is a change in the direction of rotation of the arc when the polarity of the welding current changes and the general magnetic field angle remains constant.

It is particularly preferred when the arc is generated by an electric alternating current, the polarity of this electric alternating current being changed at least once during the welding process, wherein the general magnetic field angle is varied depending on the change in polarity, in particular in synchronism with the change in polarity.

The magnetic field angle preferably varies at the same time as the polarity of the alternating current changes.

If, for example, the mathematical sign of the radial components of the magnetic field vectors is changed in synchronism with the changes in polarity of the arc current during stud welding with alternating current, the direction of rotation and focusing or defocusing of the charge carriers are maintained.

Secondly, influencing the magnetic field angle and/or the polarity of the alternating current also make it possible to intentionally reverse the direction of rotation and/or to switch over between focusing and defocusing.

The stud welding process can be influenced over a wide range in this way in order to ultimately achieve good welding results.

According to a further preferred embodiment, the arc is generated by an electric direct current, wherein the general magnetic field angle is varied by varying the position of a section of a magnetic field generating device.

The magnetic field angle can be influenced by varying the position or offsetting the position of the section of the magnetic field generating device. This is preferably performed by the magnetic field angle being tilted beyond a radial plane or an axis which is perpendicular to the said plane. Tilting beyond a plane or beyond the longitudinal axis in this way can produce a change in the mathematical sign of a radial and/or of an axial component of the magnetic field. In other words, the magnetic field vectors are tilted towards or away from the stud axis.

The section of the magnetic field generating device can be a magnetic field source, for example a permanent magnet. However, the section of the magnetic field generating device can also be a magnet yoke or a field former. If the magnetic field angle is varied by varying the position of the section of the magnetic field generating device, comparatively simple mechanical arrangements can exact a change in the mathematical sign of the radial and/or of the axial component.

In this embodiment, the welding result can be optimized by a coordinated change in the magnetic field angle, with the direction of rotation remaining the same, at any times or depending on other welding parameters, for example the arc current.

Varying the magnetic field angle by offsetting the position of the section of the magnetic field generating device means it is possible to use a magnetic field source which does not exhibit the option of polarity reversal, for example a permanent magnet.

In this case, it is particularly advantageous when the section of the magnetic field generating device is moved parallel to the longitudinal direction.

Since, particularly in the case of stud welding, axial mobility is also established for other components (for example for a holder of a stud), it is structurally comparatively simple to also move a section of the magnetic field generating device in parallel relative to the longitudinal direction.

Overall, it is also preferred when the magnetic field is generated by a magnetic field generating device which has a permanent magnet as the magnetic field source. It goes without saying that the magnetic field generating device can also have a plurality of permanent magnets. The use of a permanent magnet with an orientation parallel relative to the longitudinal direction, in particular concentrically relative to a longitudinal axis of the arc, is particularly preferred.

In general, it is also possible for the direction of the magnetic field vectors which form the magnetic field to be changed by 180°, for example from a radially inwardly directed magnetic field vector to a radially outwardly directed magnetic field vector.

Furthermore, it is preferred, overall, when the magnetic field is generated by a magnetic field generating device which has an electrical coil, wherein the general magnetic field angle is varied by the polarity of the coil being reversed or a switch-on state of the coil being changed.

A simultaneous change in the mathematical sign of the radial and of the axial component of the magnetic field can be achieved by reversing the polarity or changing the switch-on state (from switched on to switched off or vice versa) of the electrical coil which serves as the magnetic field source. As a result, a change in the polarity of the welding current source (in the case of alternating current), for example, can be compensated for in order to maintain the direction of rotation and, in the process, to change from focusing to defocusing of, for example, ions, and vice versa. Furthermore, it goes without saying that a magnetic field generating device can also have a permanent magnet and a coil of which the polarity can be reversed. Also feasible are magnetic field generating devices which can have a coil, in particular of which the polarity can be reversed, and also a section of the magnetic field generating device of which the position can be mechanically varied.

In a further preferred embodiment, charge carriers of the arc execute a rotary movement about the longitudinal direction on account of the radial component of the magnetic field, wherein the general magnetic field angle is varied in such a way that the direction of rotation is retained.

As a result, a changeover can be made between focusing influencing and defocusing influencing of the arc, for example with the direction of rotation of the arc remaining the same, by the magnetic field angle being changed.

As an alternative, the direction of rotation can also remain the same when the electric welding current is an alternating current. In this case, in the event of a change in the polarity of the welding current, the magnetic field angle can be varied in synchronism with the said change in polarity such that the direction of rotation remains the same.

Furthermore, according to the present invention, when charge carriers of the arc are focused or defocused on account of the magnetic field, and when the magnetic field angle is varied in such a way that the focusing or the defocusing is maintained over the arc duration.

As mentioned above, this embodiment can be combined with those in which the direction of rotation of the charge carriers of the arc is retained.

According to the present invention, charge carriers of the arc are focused or defocused on account of the magnetic field, wherein the magnetic field angle is varied in such a way that the focusing or the defocusing over the arc duration alternates cyclically with changes in the magnetic field angle.

As a result of this measure, the arc can be influenced such that it partially melts a relatively large area of the surface of the workpiece onto which the component is to be welded.

In the stud welding apparatus according to the invention, it is preferred when the magnetic field generating device has at least one electrical coil, it being possible to reverse the polarity of this electrical coil in order to vary the magnetic field angle.

In the case of magnetic fields which have a radial and an axial component, reversing the polarity of the coil can, at the same time, vary the radial and the axial component of the magnetic field, as a result of which, for example, a change in the polarity of the welding current source can be compensated for in order to maintain the direction of rotation in the same direction, and in the process to produce a change from focusing to defocusing of, for example, ions, and vice versa.

According to a further embodiment, the position of at least one section of the magnetic field generating device can be offset in order to vary the magnetic field angle.

Offsetting the position of the section of the magnetic field generating device can, for example, lead to the mathematical sign of the axial component of the magnetic field changing, in order to thus influence the direction of rotation and focusing/defocusing of the arc.

The section of the magnetic field generating device can be a magnetic field source. However, the section of the magnetic field generating device can also be a yoke by means of which a magnetic circuit between a magnetic field source and an air gap is closed, the arc burning within said air gap.

According to a particularly preferred embodiment, that section of the magnetic field generating device of which the position can be offset is firmly connected to the component holder or to a mouthpiece which is arranged around the arc during the welding process.

In this embodiment, use can be made of the fact that, in the case of stud welding apparatuses of the generic type, it has to be possible to move the component holder in the longitudinal direction in any case, in order to be able to carry out the stud welding process. Accordingly, the lift of the component holder (corresponding to the length of the arc) can be varied in order to vary the magnetic field angle.

In a preferred variant of a stud welding method, a mouthpiece is furthermore provided, the said mouthpiece being arranged around the arc during the welding process in order to reduce effects from the outside (interference of a protective gas cover or blowing effect). In this embodiment, that section of the magnetic field generating device of which the position can be offset can also be coupled to the mouthpiece.

Overall, it is also advantageous when the magnetic field generating device has a permanent magnet.

This embodiment is considered to be a separate invention irrespective of whether the stud welding apparatus or the stud welding method allows the magnetic field angle to be varied over the arc duration.

Whereas coils were generally used as magnetic field sources in the prior art, the use of a permanent magnet is hugely advantageous. This is because permanent magnets can produce a significantly higher magnetic flux density in a significantly smaller installation space, in particular when the permanent magnets are produced from rare earths.

This embodiment is particularly preferred when the components themselves are non-magnetic or are only slightly magnetic, and therefore the continuously present magnetic field of the permanent magnet has no influence on the component. Components which are composed of aluminium are particularly preferred in this case.

According to a further preferred embodiment, the component is annular, wherein at least one section of the magnetic field generating device projects into the annular opening in the component.

In this embodiment, the magnetic field can be designed with a substantially radial orientation (plus possibly a small axial component) over the entire circumference of the annular welding surface of the component, so that the arc can be influenced in a symmetrical manner. In this case, the magnetic field runs from a section radially inside the annular welding surface to a section radially outside the annular welding surface, and therefore it is preferred for at least one section of the magnetic field generating device to be arranged radially outside the arc.

The section of the magnetic field generating device which projects into the annular opening in the component can also extend through the annular opening, and therefore the magnetic field in the adjoining air gap is influenced to a lesser extent by the shape of the component.

In this case, it is particularly advantageous when the section of the magnetic field generating device which projects into the annular opening in the component or extends through the said annular opening is in the form of a permanent magnet.

Consequently, it is possible to use the present invention to tilt the magnetic field vectors in a guided manner towards or away from the longitudinal axis of a magnetic field, which is generated symmetrically to the longitudinal direction externally in an arc burning zone, by changing the mathematical sign of the radial and/or of the axial component. As a result, symmetrical focusing/defocusing of charge carriers can be exacted in the arc. Furthermore, a change from focusing to defocusing can be prevented in the event of a change in the polarity of the welding current. It is also possible to avoid a change in the direction of rotation in the event of such changes in polarity.

Permanent magnets and/or electromagnetic coils can be used as magnetic field sources.

The embodiment with a radially outer section of the magnetic field generating device may also be advantageous in embodiments in which the component is a solid stud.

The welding process sequence can be performed such that, with a given arrangement of a magnetic field generating device, an ion flow can be symmetrically focused permanently without acting on the magnetic field generating device in the event of a change in the polarity of the welding current.

Furthermore, the present invention makes it possible for a supporting foot which can be displaced in the longitudinal direction and/or a protective gas mouthpiece to be moved in time with or in synchronism with changes in the polarity of the welding current over the arc duration, in order to ensure that an ion flow is permanently focused in the event of a change in polarity over the entire welding process.

Furthermore, the polarity of the direction of current flow of an electrical coil or of electrical coils (solenoids) can be reversed, in order to permanently maintain the symmetrical focusing of an ion flow in the event of a change in the polarity of the welding current over the entire welding process.

It is also possible to use a unidirectional magnetic field of constant strength in order to achieve very good welding results in the event of frequent changes in polarity and in the case of an arc current which is composed substantially of electrons, despite alternating symmetrical focusing/defocusing.

The components can be studs with a conventional flange or with an annular flange. The components can also be annular welding nuts. The components are particularly preferably produced from a non-magnetic material, in particular aluminium (including aluminium alloys alloyed, for example, with zinc, magnesium etc.).

By way of example, in the case of aluminium, possibly also with other non-ferrous materials, an oxide skin may influence the welding process during the welding process.

If this oxide skin remains substantially intact during the welding process until the component is finally lowered, the arc is formed substantially by electrons. This can be achieved by suitable application of the method according to the invention. Furthermore, the following disadvantages can be avoided by the invention, depending on the embodiment: firstly, it is possible to avoid the lift height having to be excessively low in order to avoid blowing effects. It is also possible to avoid excessively low lift heights, as a result of which short circuits can be prevented.

Furthermore, the welding method can be performed with a relatively low current, frequent changes in polarity and/or a relatively long welding time in order to avoid overheating of the melt above the evaporation temperature of constituents of the alloy. The situation of the arc not running in a uniformly round manner or remaining in a radial position and then causing asymmetrical melting can also be avoided.

The present invention can be carried out both with direct current technology and with alternating current technology. The magnetic field angle can be varied, for example, by a permanent magnet in conjunction with an offset in the position of a section of the magnetic field generating device. As an alternative, an electromagnetic coil can be used in conjunction with a permanent magnet, in which case, for example, the magnetic field angle can be changed by switching on and switching off the coil or by reversing the polarity of the coil. It is also possible to establish the magnetic field by means of two electromagnetic coils.

In general, the present method can produce a continuous lifting movement of the section of the magnetic field generating device and possibly therefore of the component itself over the arc duration. However, the lifting movement takes place such that preferably no short circuit is produced with the workpiece.

It goes without saying that the abovementioned features and those which are still to be explained in the text which follows can be used not only in the respectively indicated combinations but also in other combinations or alone, without departing from the scope of the present invention.

Exemplary embodiments of the invention will be explained in greater detail in the following description and are illustrated in the drawing, in which:
- Fig. 1: shows a schematic view of a longitudinal section through an embodiment of a stud welding apparatus according to the invention;
- Fig. 2: shows a schematic side view of a further embodiment of a stud welding apparatus according to the invention;
- Fig. 2a: shows a magnetic field vector in the event of the polarity of a magnetic field source of the apparatus of Fig. 2 being reversed;
- Fig. 3: shows the apparatus of Fig. 2 with a magnetic field source of which the position is offset and the magnetic field angle is varied;
- Fig. 4: shows timing diagrams for illustrating a first embodiment of a stud welding method according to the invention;
- Fig. 5: shows timing diagrams for explaining a second embodiment of a stud welding method according to the invention;
- Fig. 6: shows a view of a longitudinal section through a further embodiment of a stud welding apparatus according to the invention;
- Fig. 7: shows the stud welding apparatus of Fig. 6 with a permanent magnet of which the position is offset;
- Fig. 8: is a schematic illustration for describing a focused arc;
- Fig. 9: is an illustration, which corresponds to Fig. 8, for describing a defocused arc; and
- Fig. 10: shows a schematic view of a longitudinal section through a further embodiment of a stud welding apparatus according to the invention.

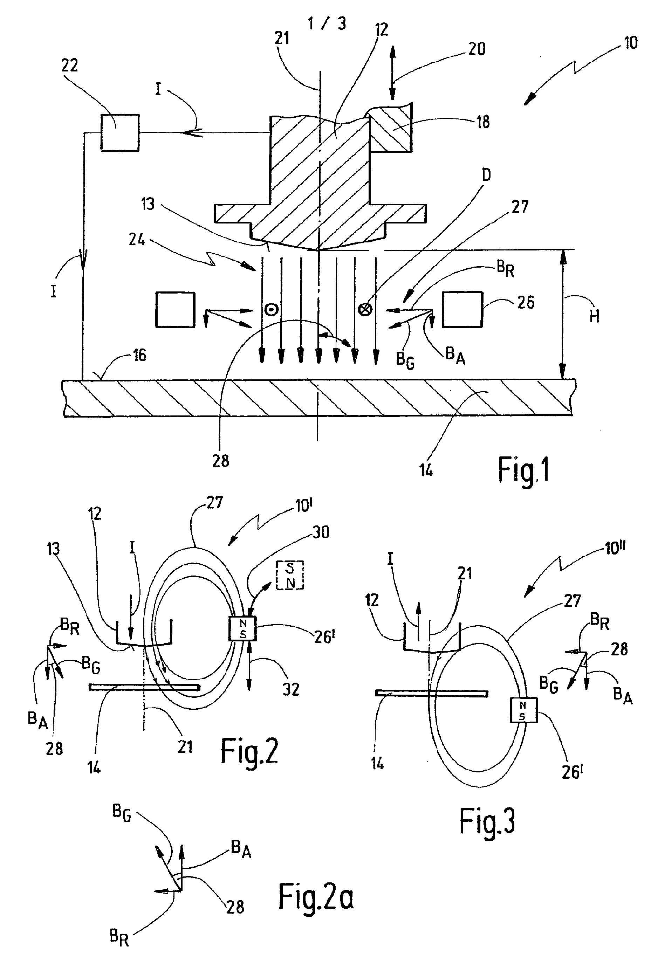

In Fig. 1, a first embodiment of a stud welding apparatus according to the invention is designated 10 in general. The stud welding apparatus 10 serves to join a component 12, which is in the form of a welding stud in the present case, to a workpiece 14. To be more precise, the component 12 is welded onto a surface 16 of the workpiece 14 without accessibility from a rear face of the workpiece 14 being necessary.

The component 12 has a welding surface 13 which is in the form of a circular surface in the present case. Furthermore, the welding surface 13 can be designed to taper slightly conically, as illustrated. The component 12 is rotationally symmetrical and the workpiece 14 is, for example, a metal sheet or the like.

The stud welding apparatus 10 also contains a schematically indicated component holder 18 on which the component 12 is held during the welding process. The component holder 18 can be moved back and forth by means of a linear motor 20 (for example an electric linear motor), as shown at 20. The component holder 18 moves parallel relative to a longitudinal axis 21 of the component 12, the said longitudinal axis additionally defining the longitudinal direction or longitudinal axis of the stud welding process.

The stud welding apparatus 10 also contains a current source 22 by means of which an electric voltage can be applied between the component 12 and the workpiece 14, with the result that an electric welding current I can flow.

A stud welding method can be carried out by means of the stud welding apparatus 10 which is shown, the said stud welding method containing the following steps: the component 12 is initially lowered onto the surface 16 of the workpiece 14 by moving the component holder 18, with the result that a lift H of the component 12 is equal to zero. The current source 22 is then switched on, with the result that an electric current flows between the component 12 and the workpiece 14. The component 12 is then lifted off the surface 16, with the result that an arc is struck, the said arc being schematically indicated by a plurality of parallel arrows in Fig. 1. The direction of the arrows depends on the direction of the current I.

As soon as the welding surface 13 and an opposite section of the surface 16 of the workpiece 14 are partially melted, the component 12 is lowered onto the workpiece 14 again. This generates an electrical short circuit, and the current source 22 is switched off. The entire melt solidifies, with the result that the component 12 is cohesively connected to the workpiece 14.

A magnetic field generating device 26 is provided in order to influence the arc, the said magnetic field generating device being schematically illustrated in Fig. 1. The magnetic field generating device 26 is designed to couple a magnetic field into at least one section of the arc 24. The magnetic field 27, which is generated by the magnetic field generating device, is preferably symmetrical relative to the longitudinal axis 21.

The magnetic field 27 can be homogeneous, but it can also be non-homogeneous. In the text which follows, it is assumed that a non-homogeneous field also defines a middle total magnetic field vector B_{G}. The total magnetic field vector B_{G} is made up of a radial component B_{R} and an axial component B_{A}.

The radial component B_{R} generates a Lorentz force on the charge carriers of the arc 24 which move parallel relative to the arc axis, the said Lorentz force being directed such that the charge carriers and the arc 24 formed as a result are made to rotate. The direction of rotation is schematically indicated at D in Fig. 1 for a negative stud polarity.

The axial component B_{A} can cause a convergence or a divergence of the arc 24 by a force effect on charge carriers which do not move parallel relative to the longitudinal axis 21. The total magnetic field vector B_{G} forms a magnetic field angle 28 with the longitudinal axis 21. When the magnetic field angle 28 is zero, the magnetic field is made up only of an axial component. When the magnetic field angle 28 is 90°, the magnetic field contains only a radial component. The radial component B_{R} and the axial component B_{A} can be directed as illustrated, that is to say radially inwardly or axially downwardly, but can each also exhibit the opposite direction.

The magnetic field generating device 26 is formed such that the component 12 is not a constituent part of the magnetic circuit. The component 12 is preferably produced from a non-ferrous metal, in particular from a material which is not magnetizable or magnetic or only slightly magnetizable or magnetic, such as aluminium, stainless steel etc.

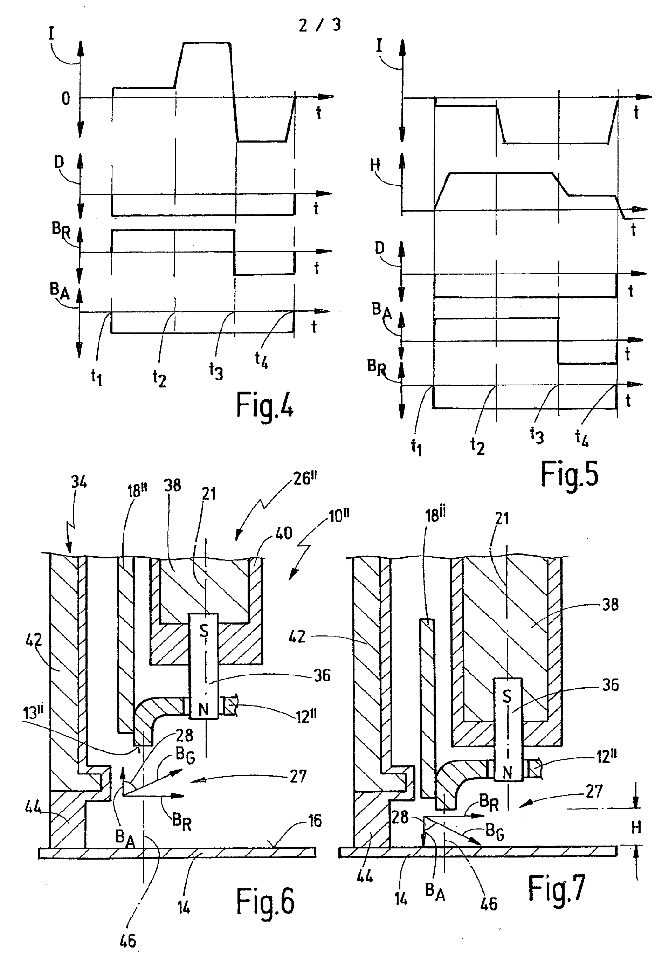

The component 12 is preferably rotationally symmetrical and, as illustrated, can be in the form of a stud, but can also be an annular element, in which case the welding surface 13 is not circular but annular. In this case, a portion of the magnetic field generating device 26 can also be located radially within the component 12 in order to thus establish a magnetic field between a radially internal section of the magnetic field generating device 26 and a radially external section of the magnetic field generating device 26 (see Fig. 7).

In one embodiment, a constant magnetic field angle 28 is established by the magnetic field generating device 26. Furthermore, the current source 22 is in the form of an alternating current source in this embodiment. In this case, the direction of rotation is reversed each time the polarity of the current source 22 changes during the welding process. In order to nonetheless achieve a complete 360° rotation of the arc current, the frequency of the alternating current I is dependent on the speed of the charge carriers in the arc 24 in this case.

However, it is particularly preferred when the magnetic field generating device 26 is designed to vary the magnetic field angle 28. This can be performed in an electrical manner or using mechanical measures.

When the magnetic field angle 28 of the total magnetic field vector B_{G} is rotated beyond a radial plane or beyond the longitudinal direction, and wherein the magnitude of the magnetic field angle is preferably only slightly changed, the mathematical sign of the radial component B_{R} and/or of the axial component B_{A} changes. As a result, it is possible to keep the direction D of rotation constant, even if the polarity of an alternating current source 22 changes, by the magnetic field angle 28 being varied in synchronism with the changes in polarity. Furthermore, focusing and defocusing of the charge carriers of the arc 24 can be influenced by varying the magnetic field angle 28, wherein it should be noted, in the process, that the arc 24, particularly in the case of aluminium components 12, can comprise ions and electrons or predominantly only electrons. Consequently, it is preferred to know which type of charge carriers mainly form the arc 24 in order to then be able to influence the focusing/defocusing of the arc 24 and/or the direction of rotation of the said arc by varying the magnetic field angle 28.

The further Figures 2 to 10 show further embodiments of stud welding apparatuses which generally correspond to the stud welding apparatus 10 of Fig. 1 in respect of design and manner of operation. Identical elements are therefore identified by the same reference symbols. Essentially, the differences will be explained in the text which follows.

Figs 2 and 3 show a first embodiment of a stud welding apparatus 10', in which a magnetic field generating device 26' is formed by a magnetic field source with axial orientation in a rotationally symmetrical manner about the component 12. This establishes a magnetic field 27 which has an axial component B_{A} and a radial component B_{R} in the region of the arc 24 between the component 12 and the workpiece 14, with the result that a total magnetic field vector B_{G} is formed, the said total magnetic field vector being directed obliquely downwards from the longitudinal axis 21 in Fig. 2. The total magnetic field vector B_{G} can be rotated through 180° by reversing the polarity of the magnetic field source 26', as schematically shown at 30 in Fig. 2, with the result that the direction and the mathematical sign of both the radial component B_{R} and the axial component B_{A} change. This is shown in Fig. 2a. In this case, the magnitude of the magnetic field angle 28 is constant, but the mathematical sign of the magnetic field angle 28 changes. For example, a positive magnetic field angle 28 is shown in Fig. 2 and a negative magnetic field angle 28 is shown in Fig. 2a.

The polarity of the magnetic field source can be reversed in an electrical manner when, for example, the magnetic field source is formed by an electrical coil. However, in general, it is also possible to rotate the magnetic field source mechanically.

Fig. 3 shows a further embodiment, in which the magnetic field source 26' is not rotated but the position of said magnetic field source is offset parallel relative to the longitudinal axis 21. This changes the magnetic field angle 28 in such a way that the mathematical sign of the axial component B_{A} remains the same compared to Fig. 2 but the mathematical sign of the radial component B_{R} changes compared to Fig. 2. The magnetic field generating device 26 or a section of said magnetic field generating device can be moved, in the axial direction, parallel relative to the longitudinal axis 21 by means of a position offsetting device 32.

Fig. 2 shows that the welding current I is negative, that is to say flows from the component 12 to the workpiece 14. Fig. 3 shows that the polarity of the welding current I has changed. As a result of the change in polarity of the welding current I being accompanied by a change in the mathematical sign of at least one component B_{R} of the total magnetic field vector B_{G}, both the direction D of rotation and the focusing or the defocusing of the charge carriers of the arc 24 can remain the same during the welding process. Figs 2 and 3 show that the magnetic field 27 can extend through the component 12. In the case of non-magnetic components, the magnetic field 27 can also run along the outside of the outer circumference of the component 12 and be deflected into the region of the arc 24 at the lower face of the component 12.

Figs 2 and 3 essentially serve to illustrate how magnetic field vectors have to be changed in synchronism with the changes in the polarity of the arc current in the joining zone in order to keep the direction of rotation and the focusing or defocusing of charge carriers in the arc constant over the entire welding process.

A stud welding apparatus of Figs 2 and 3 can also implement a stud welding method, as is illustrated in Fig. 4. In Fig. 4, the welding current I, the direction D of rotation of the arc 24, the radial component B_{R} of the total magnetic field vector and the axial component B_{A} of the said total magnetic field vector are plotted over time.

In this case, Fig. 4 shows the process starting from a time t₁ at which the component 12 has been lifted off from the workpiece 14 after the welding current I is switched on. At this time, a small preweld current initially flows up until a time t₂, the said preweld current turning into a positive welding current I at time t₂ to time t₃. There is a change in polarity at time t₃ and a negative welding current I flows from t₃ to t₄.

The magnetic field generating device varies the mathematical sign of the radial component B_{R} of the magnetic field at time t₃, whereas the axial component B_{A} keeps the mathematical sign over the entire period from t₁ to t₄. This corresponds, for example, to the change in the total magnetic field vector from the illustration in Fig. 2 to the illustration in Fig. 3.

This measure results in the direction D of rotation and the focusing or defocusing of the charge carriers in the arc remaining constant over the entire period from t₁ to t₄, in spite of the change in polarity of the welding current. At time t₄, the component 12 is lowered onto the workpiece 14, with the result that a short circuit occurs. The welding process is thus terminated.

Fig. 5 shows an alternative embodiment of a stud welding process. In Fig. 5, a welding current I, a lift H of the component 12, the direction D of rotation of the arc and the axial component B_{A} and the radial component B_{R} are plotted over time.

As in the case of Fig. 4, the process begins at time t₁. A small preweld current flows up until time t₂, the said preweld current then turning into a negative welding current continuously from time t₂ up until time t₄. In contrast to Fig. 4, the method according to Fig. 5 is therefore carried out with a direct current as the welding current.

In the embodiment of Fig. 5, the magnetic field generating device 26 is operated such that at least one section of the said magnetic field generating device is moved in the axial direction parallel with the component, wherein the lift H of the component is varied with a constant welding current at time t₃. In this embodiment, the magnetic field generating device 26 is designed to vary the mathematical sign of the axial component B_{A} by changing the lift H. However, the mathematical sign of the radial component B_{R} remains constant over the entire period t₁ to t₄, with the result that a changeover is made from a focused to a defocused arc 24 at time t₃ by the change in the lift H, as will be described in even greater detail below. The direction of rotation is not varied in this embodiment since the radial component B_{R} remains constant.

Figs 6 and 7 show a further embodiment of a stud welding apparatus 10" according to the invention, the said stud welding apparatus being designed, in particular, to carry out the method of Fig. 5. In the case of the stud welding apparatus 10" which is shown in Figs 6 and 7, annular components 12" are welded onto a workpiece surface 16. The components 12" can, for example, be in the form of welding nuts and have an annular welding surface 13".

The magnetic field generating device 26" has a permanent magnet 36 in the form of a bar magnet which is arranged concentrically with respect to the longitudinal axis 21. To be more precise, at least a portion of the permanent magnet 36 extends through an annular opening in the component 12". Fig. 6 also shows that a mouthpiece 34 (for example for supplying protective gas) is arranged radially outwardly around the arc.

The magnetic field generating device 26" also has a first yoke element 38 which is produced from a magnetizable material and is connected to the upper end of the permanent magnet 36. The first yoke element 38 is embedded in a first insulation section 40.

The magnetic field generating device 26" also contains a second yoke element 42 which is integrated in the mouthpiece 34. The second yoke element 42 is in the form of a field former and has a projection which extends radially towards the arc region. The second yoke element 42 is magnetically insulated radially inwardly by a second insulation section 44. It goes without saying that the second insulation section 44 can be breached in the region of the radial projection.

The first yoke element 38 and the second yoke element 42 are magnetically coupled to one another, with the result that a magnetic circuit is formed, the said magnetic circuit having an air gap between the projection of the second yoke element (field former) 42 and a lower end of the bar magnet 36.

Fig. 6 also shows that the axis 46 of the arc between the annular welding surface 13" and the surface 16 of the workpiece 14 is offset parallel relative to the longitudinal axis 21. The air gap of the magnetic circuit extends through this region. In this case, a magnetic field which has an inwardly directed radial component B_{R} and an upwardly directed axial component B_{A} is established by way of example, with the result that an obliquely upwardly directed total magnetic field vector B_{G} is produced.

The permanent magnet 36 and possibly the first yoke element 38 are fixedly coupled to the component holder 18". By moving the component holder 18" in such a way that the lift H is reduced, the magnetic field 27 in the air gap varies in such a way that the mathematical sign of the axial component B_{A} changes and consequently the total magnetic field vector B_{G} is directed radially obliquely downwards (Fig. 7).

As a result, the magnetic field angle 28 can be varied, as shown by comparing Figs 6 and 7. Consequently, a method can, for example, be carried out by varying the lift H, as shown in Fig. 5.

As an alternative to this, an alternating current is used as the welding current, as in Fig. 4. In this case, a change in the mathematical sign of the axial component B_{A} can be used to ensure that the direction D of rotation remains constant in the event of a change in the polarity of the welding current. As an alternative to this, this change in the mathematical sign of the axial component B_{A} can be used to switch over between focusing and defocusing of the arc.

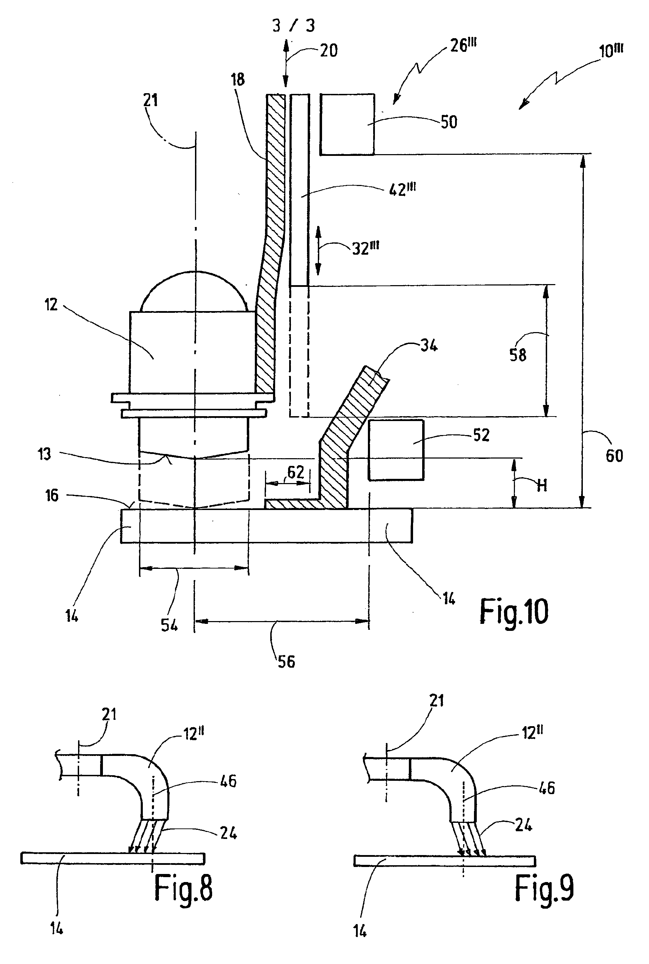

A focused arc 24 is shown in Fig. 8, the direction of the arc 24 being directed radially inwards in relation to the arc axis 46 in the case of the said focused arc. Defocusing is shown in Fig. 9, the direction of the arc being directed radially outwards in relation to the arc axis 46 in the case of the said defocusing.

The size of the partially melted section of the surface 16 of the workpiece 14 can be increased by switching over between a focused and a defocused arc. It is also possible to optionally prevent the arc melting predominantly only radially inner regions of the welding surface 13' and of the opposite surface 16.

Fig. 10 shows a further embodiment of a stud welding apparatus 10"' according to the invention, the said stud welding apparatus representing a preferred solution to influencing the arc which is schematically shown in Figs 2 and 3. The stud welding apparatus 10"' has a magnetic field generating device 26'" having a first coil 50 (or permanent magnet) and a second coil 52. The first coil 50 is arranged at the top as seen in the axial direction, and the second coil 52 is arranged at the bottom as seen in the axial direction, specifically preferably outside a mouthpiece 34 or supporting foot 34.

In this embodiment, the component 12 is once again a stud with an approximately circular welding surface 13.

The first coil 50 generates a magnetic field across yoke elements 42" and 34 in the joining zone, the said magnetic field, as in Fig. 2, having magnetic field vectors B_{G}, the axial component B_{A} of the said magnetic field vectors being directed towards the workpiece 14, and the radial component B_{R} of the said magnetic field vectors being directed towards the longitudinal axis 21 of the arc. The first coil is switched off and the second coil 52 is switched on when the polarity of the welding current changes. This produces a magnetic field across the yoke elements 42'" and 34 in the joining zone, the direction of the radial component B_{R} changing by 180° (the mathematical sign of the said radial component has changed) in the said magnetic field. This, in turn, has the effect that the direction of rotation and the focusing of the charge carriers in the arc do not vary when the polarity of the welding current changes.

This effect can also be achieved by the first coil 50 being replaced by a permanent magnet. The second coil 52 now has the task of generating a radial component B_{R} in the joining zone which is so strong that the direction of action of the radial component which is generated by the permanent magnet in the joining zone can rotate through 180°. However, this can result in a somewhat different geometric and magnetic design of the magnetic circuits of Fig. 10.

The advantages of the embodiment shown in Fig. 10 are that stud welding on workpieces of large surface area when the workpiece is accessible only from one side and stud welding without spatter are possible, irrespective of which charge carriers make up the arc.

Fig. 10 also shows certain dimensions, in particular a welding surface diameter 54, a radial distance 56 between the second coil 52 and the longitudinal axis 21, a lift 58 of a yoke element 42"' which can be offset in the axial direction by means of a position offsetting device 32"', an axial height 60 of the first coil 50 and a radial distance 62 between the field former 42'" and the outer circumference of the component 12.

The abovementioned dimensions can be linked as follows. The lift H can, for example, be smaller than the diameter 54, in particular smaller than half the diameter 54. The further lift 58 can, for example, be larger than the lift H, specifically in particular twice as high as the lift H. The second coil 52 can be arranged approximately level with the maximum lift H during a welding process. The height 60 of the first coil 50 can be at least three times as high as the maximum lift H, and at most approximately five times as high as the maximum lift H.

The radial distance 62 is preferably of the order of magnitude of half the welding surface diameter 54. The radial distance 56 is preferably approximately twice that of the welding surface diameter 54.

A high level of variability in respect of influencing the arc 24 can be achieved by providing two coils 50, 52 which can each preferably be switched on and switched off, and further preferably it being possible for the polarity of each of the said coils to be switched over.

An arc current with electrons which are defocused symmetrically relative to the longitudinal axis 21 and ions which are focused symmetrically relative to the longitudinal axis 21 can be generated with two coils of this kind, for example, specifically with the direction of rotation remaining the same over the entire welding process and with the polarity of the welding current changing.

Focusing of the ions can prevent weld spatter in this case. This is preferably achieved, for example, by the coils 50, 52 being alternately switched on and switched off, specifically in synchronism with the change in the polarity of the welding current I. A similar method can also be achieved when the magnetic field generating device 26 has only one permanent magnet 36 (Figs 6 and 7) and when the lift H is varied in synchronism with the change in polarity of the welding current.

## Claims

1. Method of stud welding for welding a component (12) to a surface (16) of a workpiece (14), comprising the steps of
lowering the component (12) onto the surface (16) of the workpiece (14) and switching on an electric current (I);
lifting the component (12) off the workpiece (14), with the result that an arc (24) which is oriented substantially in the longitudinal direction (21) is struck;
influencing the arc (24) using a magnetic field (27), with the magnetic field (27) being oriented at a general magnetic field angle (28) in relation to the longitudinal direction (21) and having an axial component (B_{A}) and/or a radial component (B_{R}); and
lowering the component (12) onto the workpiece (14) in order to establish the weld connection;
wherein the general magnetic field angle (28) is varied over the arc duration in order to dynamically influence the arc (24) by the mathematical sign of the radial and/or of the axial component (B_{R}, B_{A}) being changed at least once over the arc duration,
**characterized in that**
charge carriers of the arc (24) are focused or defocused on account of the magnetic field, and wherein the magnetic field angle (28) is varied in such a way that the focusing or the defocusing is maintained over the arc duration or alternates over the arc duration cyclically with changes in the magnetic field angle (28), wherein the arc is directed radially inwards for focusing, and the arc is directed radially outwards for defocussing.

2. Method according to Claim 1, wherein the general magnetic field angle (28) is mirrored at the axial component (B_{A}) and/or at the radial component (B_{R}).

3. Method according to Claim 1 or 2, wherein the general magnetic field angle is rotated by 180°.

4. Method according to one of Claims 1-3, wherein the arc (24) is generated by an electric alternating current (I), the polarity of this electric alternating current being changed at least once during the welding process, and wherein the general magnetic field angle (28) is varied in synchronism with the change in polarity.

5. Method according to one of Claims 1-4, wherein the arc (24) is generated by an electric direct current (I), and wherein the general magnetic field angle (28) is varied by varying the position of a section of a magnetic field generating device (26).

6. Method according to Claim 5, wherein the section of the magnetic field generating device (26) is moved parallel to the longitudinal direction.

7. Method according to one of Claims 1-6, wherein the magnetic field is generated by a magnetic field generating device which has a permanent magnet.

8. Method according to one of Claims 1-7, wherein the magnetic field is generated by a magnetic field generating device which has an electrical coil, and wherein the general magnetic field angle is varied by the polarity of the coil being reversed or a switch-on state of the coil being changed.

9. Method according to one of Claims 1-8, wherein charge carriers of the arc (24) execute a rotary movement about the longitudinal direction on account of the radial component (B_{R}) of the magnetic field (27), and wherein the general magnetic field angle is varied in such a way that the direction of rotation is retained.

10. Apparatus (10) for stud welding a component (12) onto a workpiece (14), in particular for carrying out the method according to one of Claims 1 to 9, having
a component holder (18) on which a component (12) can be held,
a linear motor (20) by means of which the component holder (18) together with a component (12) which is held on it can be moved in a longitudinal direction (21),
a current source connection for connecting an electric welding current source (22), and
a magnetic field generating device (26) for generating a magnetic field (27), it being possible to influence an arc (24) which is burning between the component (12) and the workpiece (14) by means of the said magnetic field, wherein the magnetic field (27) is oriented at a general magnetic field angle in relation to the longitudinal direction (21) and has an axial component (B_{A}) and/or a radial component (B_{R}),
**characterized in that** the magnetic field generating device (26) is designed to vary the general magnetic field angle (28) of the magnetic field (27) in relation to the longitudinal direction (21) in order to dynamically influence the arc (24) by the mathematical sign of the radial and/or of the axial component (B_{R}, B_{A}) being changed at least once over the arc duration, and in such a way that
charge carriers of the arc (24) are focused or defocused on account of the magnetic field, and the magnetic field generating device (26) is further designed for varying the magnetic field angle (28) in such a way that the focusing or the defocusing is maintained over the arc duration or alternates over the arc duration cyclically with changes in the magnetic field angle (28), wherein the arc is directed inwards for focusing, and the arc is directed outwards for defocusing.

11. Apparatus according to Claim 10, **characterized in that** the magnetic field generating device (26) has at least one electrical coil (50, 52), it being possible to reverse the polarity of this electrical coil in order to vary the magnetic field angle (28).

12. Apparatus according to Claim 10 or 11, **characterized in that** the position of at least one section of the magnetic field generating device (26) can be offset in order to vary the magnetic field angle (28).

13. Apparatus according to Claim 12, **characterized in that** that section of the magnetic field generating device (26) of which the position can be offset is firmly connected to the component holder (18) or to a mouthpiece (34) which is arranged around the arc (24) during the welding process.

14. Apparatus according to one of Claims 10 to 13, **characterized in that** the magnetic field generating device (26) has a permanent magnet (36).

15. Apparatus according to one of Claims 10 to 14, **characterized in that** the component (12) is annular, wherein at least one section of the magnetic field generating device (26) projects into the annular opening in the component (12).

16. Apparatus according to one of Claims 10 to 15, **characterized in that** at least one section of the magnetic field generating device (26) is arranged radially outside the arc (24).

## Patentansprüche

1. Bolzenschweißverfahren zum Schweißen eines Bauelementes (12) auf eine Oberfläche (16) eines Werkstückes (14), mit den Schritten,
Absenken des Bauelementes (12) auf die Oberfläche (16) des Werkstückes (14) und Einschalten eines elektrischen Stromes (I);
Abheben des Bauelementes (12) von dem Werkstück (14), so dass ein im Wesentlichen in Längsrichtung (21) ausgerichteter Lichtbogen (24) gezogen wird;
Beeinflussen des Lichtbogens (24) durch ein Magnetfeld (27), wobei das Magnetfeld (27) in einem generellen Magnetfeldwinkel (28) in Bezug auf die Längsrichtung (21) ausgerichtet ist und eine axiale Komponente (B_{A}) und/oder eine radiale Komponente (B_{R}) aufweist; und
Absenken des Bauelementes (12) auf das Werkstück (14), um die Schweißverbindung herzustellen;
wobei der generelle Magnetfeldwinkel (28) während der Lichtbogendauer verändert wird, um den Lichtbogen (24) dynamisch zu beeinflussen, indem das Vorzeichen der radialen und/oder der axialen Komponente (B_{R}, B_{A}) während der Lichtbogendauer wenigstens einmal geändert wird,
**dadurch gekennzeichnet, dass**
Ladungsträger des Lichtbogens (24) aufgrund des Magnetfeldes fokussiert oder defokussiert werden und wobei der Magnetfeldwinkel (28) derart verändert wird, dass die Fokussierung oder die Defokussierung während der Lichtbogendauer beibehalten werden oder während der Lichtbogendauer zyklisch mit Änderungen des Magnetfeldwinkels (28) wechseln, wobei der Lichtbogen zum Fokussieren radial einwärts gerichtet ist und wobei der Lichtbogen zum Defokussieren radial auswärts gerichtet wird.

2. Verfahren nach Anspruch 1, wobei der generelle Magnetfeldwinkel (28) an der axialen Komponente (B_{A}) und/oder an der radialen Komponente (B_{R}) gespiegelt wird.

3. Verfahren nach Anspruch 1 oder 2, wobei der generelle Magnetfeldwinkel um 180° gedreht wird.

4. Verfahren nach einem der Ansprüche 1 - 3, wobei der Lichtbogen (24) durch einen elektrischen Wechselstrom (I) erzeugt wird, dessen Polarität während des Schweißvorganges wenigstens einmal geändert wird, und wobei der generelle Magnetfeldwinkel (28) synchron mit dem Polaritätswechsel verändert wird.

5. Verfahren nach einem der Ansprüche 1 - 4, wobei der Lichtbogen (24) durch einen elektrischen Gleichstrom (I) erzeugt wird, und wobei der generelle Magnetfeldwinkel (28) durch eine Veränderung der Position eines Abschnittes einer Magnetfelderzeugungseinrichtung (26) verändert wird.

6. Verfahren nach Anspruch 5, wobei der Abschnitt der Magnetfelderzeugungseinrichtung (26) parallel zur Längsrichtung bewegt wird.

7. Verfahren nach einem der Ansprüche 1 - 6, wobei das Magnetfeld von einer Magnetfelderzeugungseinrichtung erzeugt wird, die einen Permanentmagneten aufweist.

8. Verfahren nach einem der Ansprüche 1 - 7, wobei das Magnetfeld von einer Magnetfelderzeugungseinrichtung erzeugt wird, die eine elektrische Spule aufweist, und wobei der generelle Magnetfeldwinkel verändert wird, indem die Spule umgepolt wird oder ein Einschaltzustand der Spule geändert wird.

9. Verfahren nach einem der Ansprüche 1 - 8, wobei Ladungsträger des Lichtbogens (24) aufgrund der radialen Komponente (B_{R}) des Magnetfeldes (27) eine Drehbewegung um die Längsrichtung ausüben, und wobei der generelle Magnetfeldwinkel derart verändert wird, dass der Drehsinn erhalten bleibt.

10. Vorrichtung (10) zum Bolzenschweißen eines Bauelementes (12) auf ein Werkstück (14), insbesondere zur Durchführung des Verfahrens nach einem der Ansprüche 1 bis 9, mit
einem Bauelementhalter (18), an dem ein Bauelement (12) gehalten werden kann,
einem Linearmotor (20), mittels dessen der Bauelementhalter (18) mit einem daran gehaltenen Bauelement (12) in einer Längsrichtung (21) bewegbar ist,
einem Stromquellenanschluss zum Anschließen einer elektrischen Schweißstromquelle (22), und
einer Magnetfelderzeugungseinrichtung (26) zum Erzeugen eines Magnetfelds (27), mittels dessen ein zwischen dem Bauelement (12) und dem Werkstück (14) brennender Lichtbogen (24) beeinflussbar ist, wobei das Magnetfeld (27) in einem generellen Magnetfeldwinkel in Bezug auf die Längsrichtung (21) ausgerichtet ist und eine axiale Komponente (B_{A}) und/oder eine radiale Komponente (B_{R}) aufweist,
**dadurch gekennzeichnet, dass**
die Magnetfelderzeugungseinrichtung (26) dazu ausgelegt ist, den generellen Magnetfeldwinkel (28) des Magnetfelds (27) in Bezug auf die Längsrichtung (21) zu verändern, um den Lichtbogen (24) dynamisch zu beeinflussen, indem das Vorzeichen der radialen und/oder der axialen Komponente (B_{R}, B_{A}) während der Lichtbogendauer wenigstens einmal geändert wird, und derart, dass Ladungsträger des Lichtbogens (24) aufgrund des Magnetfeldes fokussiert oder defokussiert werden, wobei die Magnetfelderzeugnungseinrichtung (26) ferner dazu ausgelegt ist, den Magnetfeldwinkel (28) zu variieren, derart, dass die Fokussierung oder die Defokussierung während der Lichtbogendauer beibehalten werden oder während der Lichtbogendauer zyklisch mit Änderungen des Magnetfeldwinkels (28) wechseln, wobei der Lichtbogen zum Fokussieren einwärts gerichtet ist und wobei der Lichtbogen zum Defokussieren auswärts gerichtet ist.

11. Vorrichtung nach Anspruch 10, **dadurch gekennzeichnet, dass** die Magnetfelderzeugungseinrichtung (26) wenigstens eine elektrische Spule (50, 52) aufweist, die umpolbar ist, um den Magnetfeldwinkel (28) zu verändern.

12. Vorrichtung nach Anspruch 10 oder 11, **dadurch gekennzeichnet, dass** zumindest ein Abschnitt der Magnetfelderzeugungseinrichtung (26) lageversetzbar ist, um den Magnetfeldwinkel (28) zu verändern.

13. Vorrichtung nach Anspruch 12, **dadurch gekennzeichnet, dass** der lageversetzbare Abschnitt der Magnetfelderzeugungseinrichtung (26) mit dem Bauelementhalter (18) oder mit einem Mundstück (34) fest verbunden ist, das bei dem Schweißprozess um den Lichtbogen (24) herum angeordnet wird.

14. Vorrichtung nach einem der Ansprüche 10 bis 13, **dadurch gekennzeichnet, dass** die Magnetfelderzeugungseinrichtung (26) einen Permanentmagneten (36) aufweist.

15. Vorrichtung nach einem der Ansprüche 10 bis 14, **dadurch gekennzeichnet, dass** das Bauelement (12) ringförmig ist, wobei zumindest ein Abschnitt der Magnetfelderzeugungseinrichtung (26) in die Ringöffnung des Bauelementes (12) ragt.

16. Vorrichtung nach einem der Ansprüche 10 bis 15, **dadurch gekennzeichnet, dass** zumindest ein Abschnitt der Magnetfelderzeugungseinrichtung (26) radial außerhalb des Lichtbogens (24) angeordnet ist.

## Revendications

1. Procédé de soudage en bout destiné à souder un composant (12) à une surface (16) d'une pièce (14), comportant les étapes consistant à
abaisser le composant (12) jusque sur la surface (16) de la pièce (14) et établir un courant électrique (I) ;
décoller le composant (12) de la pièce (14), ce qui a pour effet d'amorcer un arc (24) qui est orienté sensiblement dans la direction longitudinale (21) ;
influencer l'arc (24) à l'aide d'un champ magnétique (27), le champ magnétique (27) étant orienté suivant un angle général (28) de champ magnétique par rapport à la direction longitudinale (21) et possédant une composante axiale (B_{A}) et/ou une composante radiale (B_{R}) ; et
abaisser le composant (12) jusque sur la pièce (14) afin d'établir la connexion de soudage ;
l'angle général (28) de champ magnétique subissant une variation au cours de la durée de l'arc afin d'influencer dynamiquement l'arc (24) par un changement du signe mathématique des composantes radiale et / ou axiale (B_{R}, B_{A}) intervenant au moins une fois au cours de la durée de l'arc,
**caractérisé en ce que**
des porteurs de charges de l'arc (24) sont focalisés ou défocalisés en fonction du champ magnétique, et l'angle (28) de champ magnétique subissant une variation de telle manière que la focalisation ou la défocalisation soit maintenue au cours de la durée de l'arc ou alterne cycliquement au cours de la durée de l'arc avec des changements de l'angle (28) de champ magnétique, l'arc étant dirigé radialement vers l'intérieur pour la focalisation, et l'arc étant dirigé radialement vers l'extérieur pour la défocalisation.

2. Procédé selon la revendication 1, l'angle général (28) de champ magnétique étant réfléchi au niveau de la composante axiale (B_{A}) et/ou de la composante radiale (B_{R}).

3. Procédé selon la revendication 1 ou 2, l'angle général de champ magnétique subissant une rotation de 180°.

4. Procédé selon l'une des revendications 1 à 3, l'arc (24) étant généré par un courant électrique alternatif (I), la polarité de ce courant électrique alternatif étant modifiée au moins une fois au cours du processus de soudage, et l'angle général (28) de champ magnétique subissant une variation en synchronisme avec le changement de polarité.

5. Procédé selon l'une des revendications 1 à 4, l'arc (24) étant généré par un courant électrique continu (I), et l'angle général (28) de champ magnétique subissant une variation en faisant varier la position d'une section d'un dispositif (26) générateur de champ magnétique.

6. Procédé selon la revendication 5, la section du dispositif (26) générateur de champ magnétique étant déplacée parallèlement à la direction longitudinale.

7. Procédé selon l'une des revendications 1 à 6, le champ magnétique étant généré par un dispositif générateur de champ magnétique doté d'un aimant permanent.

8. Procédé selon l'une des revendications 1 à 7, le champ magnétique étant généré par un dispositif générateur de champ magnétique doté d'une bobine électrique, et l'angle général de champ magnétique subissant une variation par l'inversion de la polarité de la bobine ou par un changement de l'état de mise sous tension de la bobine.

9. Procédé selon l'une des revendications 1 à 8, des porteurs de charges de l'arc (24) exécutant un mouvement tournant autour de la direction longitudinale en fonction de la composante radiale (B_{R}) du champ magnétique (27), et l'angle général de champ magnétique subissant une variation de telle manière que le sens de rotation soit conservé.

10. Appareil (10) destiné au soudage en bout d'un composant (12) sur une pièce (14), en particulier à réaliser le procédé selon l'une des revendications 1 à 9, comprenant un support (18) de composant sur lequel un composant (12) peut être maintenu,
un moteur linéaire (20) au moyen duquel le support (18) de composant, accompagné d'un composant (12) qui est maintenu sur celui-ci, peut être déplacé dans une direction longitudinale (21),
un raccordement de source de courant destiné à raccorder une source (22) de courant électrique de soudage, et
un dispositif (26) générateur de champ magnétique destiné à générer un champ magnétique (27), avec la possibilité d'influencer un arc (24) qui brûle entre le composant (12) et la pièce (14) au moyen dudit champ magnétique, le champ magnétique (27) étant orienté suivant un angle général de champ magnétique par rapport à la direction longitudinale (21) et possédant une composante axiale (B_{A}) et/ou une composante radiale (B_{R}),
**caractérisé en ce que** le dispositif (26) générateur de champ magnétique est conçu pour faire varier l'angle général (28) de champ magnétique du champ magnétique (27) par rapport à la direction longitudinale (21) afin d'influencer dynamiquement l'arc (24) par un changement du signe mathématique des composantes radiale et / ou axiale (B_{R}, B_{A}) intervenant au moins une fois au cours de la durée de l'arc, et de telle manière que des porteurs de charges de l'arc (24) soient focalisés ou défocalisés en fonction du champ magnétique, et **en ce que** le dispositif (26) générateur de champ magnétique est en outre conçu pour faire varier l'angle (28) de champ magnétique de telle manière que la focalisation ou la défocalisation soit maintenue au cours de la durée de l'arc ou alterne cycliquement au cours de la durée de l'arc avec des changements de l'angle (28) de champ magnétique, l'arc étant dirigé vers l'intérieur pour la focalisation, et l'arc étant dirigé vers l'extérieur pour la défocalisation.

11. Appareil selon la revendication 10, **caractérisé en ce que** le dispositif (26) générateur de champ magnétique est doté d'au moins une bobine électrique (50, 52), avec la possibilité d'inverser la polarité de cette bobine électrique afin de faire varier l'angle (28) de champ magnétique.

12. Appareil selon la revendication 10 ou 11, **caractérisé en ce que** la position d'au moins une section du dispositif (26) générateur de champ magnétique peut être décalée afin de faire varier l'angle (28) de champ magnétique.

13. Appareil selon la revendication 12, **caractérisé en ce que** la section en question du dispositif (26) générateur de champ magnétique dont la position peut être décalée est en liaison complète avec le support (18) de composant ou avec un pavillon (34) qui est disposé autour de l'arc (24) au cours du processus de soudage.

14. Appareil selon l'une des revendications 10 à 13, **caractérisé en ce que** le dispositif (26) générateur de champ magnétique est doté d'un aimant permanent (36).

15. Appareil selon l'une des revendications 10 à 14, **caractérisé en ce que** le composant (12) est annulaire, au moins une section du dispositif (26) générateur de champ magnétique dépassant dans l'ouverture annulaire du composant (12).

16. Appareil selon l'une des revendications 10 à 15, **caractérisé en ce qu'**au moins une section du dispositif (26) générateur de champ magnétique est disposée radialement à l'extérieur de l'arc (24).
